Europäisches Patentamt

European Patent Office

Office européen des brevets

(11) Publication number: **0 445 288 A1**

## (12) EUROPEAN PATENT APPLICATION published in accordance with Art. 158(3) EPC

(21) Application number: 89907284.7

(22) Date of filing: 17.06.89

(86) International application number:
PCT/JP89/00608

(87) International publication number:
WO 89/12854 (28.12.89 89/30)

(51) Int. Cl.5: **G05B 19/04**

(30) Priority: 23.06.88 JP 155709/88

(43) Date of publication of application:
11.09.91 Bulletin 91/37

(84) Designated Contracting States:
DE FR GB IT

(71) Applicant: FANUC LTD.
3580, Shibokusa Aza-Komanba, Oshino-mura
Minamitsuru-gun, Yamanashi 401-05(JP)

(72) Inventor: KINOSHITA, Jiro,Fanuc Mansion
Harimomi 6-210
3537-1,
Shibokusa,Oshinomura,Minamitsuru-gun
Yamanashi 401-05(JP)

(74) Representative: Brunner, Michael John et al
GILL JENNINGS & EVERY 53-64 Chancery
Lane
London WC2A 1HN(GB)

(54) OPERATION PROCESSING UNIT.

(57) An operation processing unit for processing a program that includes a function instruction, a byte logic operation instruction and a bit logic operation instruction. This unit has a control processor (1) for controlling the whole arithmetic unit, a ladder instruction memory (11) for storing a program, a processor (13) for instructing function, a processor (14) for instructing byte logic operation, and a processor (15) for instructing bit logic operation. These processors (13, 14, 15) process the programs in parallel, and the processings are arbitrated by an arbitration circuit (12).

Fig. 1

EP 0 445 288 A1

Technical Field

The present invention relates to an operation system such as a PC (programmable controller), a numerical control device, or the like, and more particularly, to an operation processing system provided with a plurality of processors corresponding to program commands.

Background Art

Sequence programs for a PC (programmable controller) contain commands having the following formats:

First, function commands such as for counters, arithmetical operations, and automatic tool changes, etc.; whereby a complicated function can be specified by a single command.

Second, byte logical operation commands such as for byte-mode data transfers, etc.

Third, bit logical operation commands for processes such as bit-mode logical sums and logical products, etc.

To execute sequence programs containing commands having the above-mentioned formats at a high speed, an operation processing system having a special processor called a bit operation controller is used, which exclusively executes bit logical operation commands.

There is, however, a demand for a PC (programmable controller) and the like capable of processing a larger-capacity program at a high speed, and an operation processing system provided with a conventional bit operation controller does not have a sufficiently high processing speed.

Disclosure of the Invention

The present invention was created in view of the above circumstances, and an object thereof is to provide an operation processing system provided with a plurality of processors corresponding to program commands.

To achieve the above object, the present invention provides an operation processing system for processing a program containing function commands, byte logical operation commands, and bit logical operation commands, the system comprising an administrative processor for controlling the entire operation processing system, a memory for storing the program, a function command processor for executing the function commands, a byte logical operation command processor for executing the byte logical operation commands, a bit logical operation command processor for executing the bit logical operation commands, and an arbiter circuit for arbitrating command executions of the function command processor, the byte logical operation command processor, and the bit logical operation command processor.

The processors execute respective commands in parallel and accordingly, can process programs at a high speed, and since the number of commands to be processed and the processing speed differ from one processor to another, the arbiter circuit arbitrates the operations of these processors.

Brief Description of the Drawing

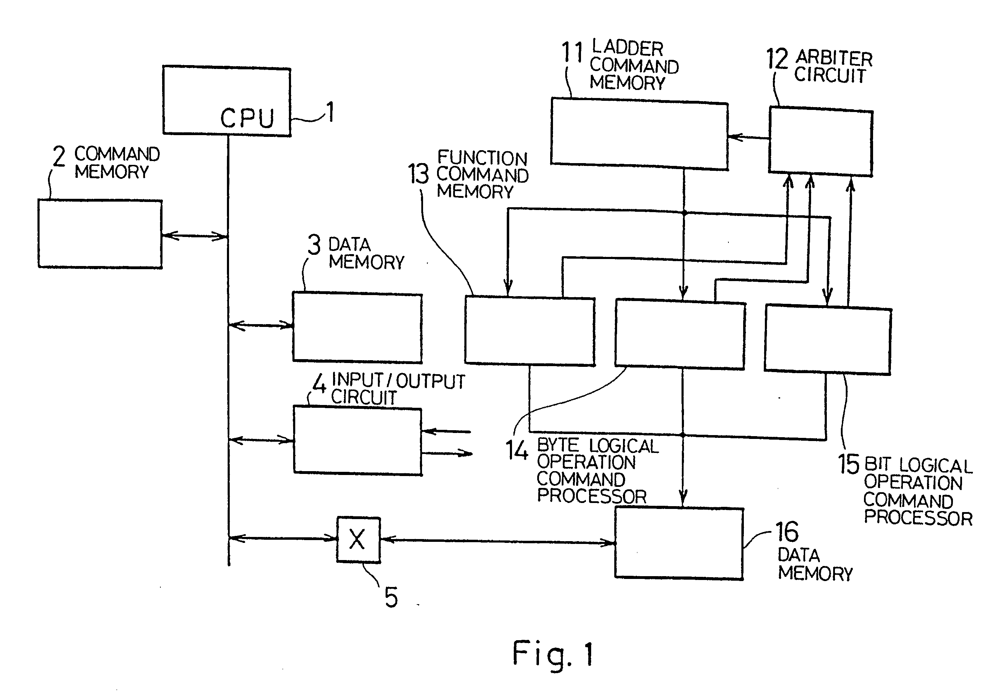

Figure 1 is a block diagram showing an operation processing system according to one embodiment of the present invention.

Best Mode of Carrying Out the Invention

An embodiment of the present invention will now be described with reference to the drawing.

Figure 1 is a block diagram showing an operation processing system according to the embodiment of the present invention, wherein 1 denotes an administrative processor for controlling the entire operation processing system and executing commands other than those processed by various processors described later; 2 denotes a command memory for storing commands processed by the administrative processor 1; 3 denotes a data memory for storing data processed by a sequence program or the like; 4 denotes an input/output circuit which receives signals from a machine side, the input signals being read by the administrative processor 1, and outputs signals from the administrative processor 1 to the machine side; and 5 denotes a buffer for transferring data to and from the data memory 3.

Numeral 11 denotes a ladder command memory for storing sequence programs produced in a ladder format, in the order of execution; and 12 denotes an arbiter circuit for arbitrating the execution of commands within the individual processor in accordance with the order of the sequence programs.

Numeral 13 denotes a function command processor for executing function commands, such as arithmetic operations, e.g., addition, subtraction, multiplication, and division, etc. in the ladder program, counter commands, ATC (automatic tool change) commands, and the like; and 14 denotes a byte logical operation command processor for executing byte logical operation commands, such as byte-mode data transfers, etc.

Numeral 15 denotes a bit logical operation command processor which executes commands for logical operations in the ladder program, such as logical sums and logical products, etc.

Numeral 16 denotes a data memory for storing data to be processed by the function command processor 13, byte logical operation command processor 14 and bit logical operation command processor 15, as well as the data processed by these processors. The data to be processed is transferred from the data memory 3, and the processed data is transferred again to the data memory 3 through the buffer 5 and then output to the machine side from the input/output circuit 4, under the control of the administrative processor 1.

The function command processor 13, the byte logical operation command processor 14, and the bit logical operation command processor 15 execute the sequence programs stored in the ladder command memory 11 in parallel. The number of function commands, byte logical operation commands and bit logical operation commands in the sequence programs, however, differs from one program to be processed to another, and the execution speed per command also differs from one command to another; therefore, each processor must wait until the other processors finish the execution of commands. The required processes are carried out by the arbiter circuit 12. Namely, when each of the processors has finished the execution of commands, the arbiter circuit 12 is informed that the command execution is finished, and the arbiter circuit then permits each processor to fetch a next command to be executed.

Namely, sequence programs are processed in parallel by the provided processors corresponding to commands, and accordingly, the speed of execution of the sequence programs can be increased.

In the above description, three special processors are provided in addition to the administrative processor for globally controlling the operation processing system, but the number of special processors for executing commands may be reduced if the number of commands having specific formats in the sequence program is small, and such commands may be processed by the administrative processor.

Moreover, the above description explains an example of executing sequence programs by the PC (programmable controller), but the present invention may be also applied to a numerical control device or the like.

As described above, according to the present invention, a function command processor, a byte logical operation command processor and a bit logical operation command processor, corresponding to commands to be processed, are provided and the programs are processed in parallel, whereby the speed of execution of the programs can be increased.

**Claims**

1. An operation processing system for processing a program including function commands, byte logical operation commands and bit logical operation commands, comprising:
   an administrative processor for controlling the entire operation processing system;
   a memory for storing the program;
   a function command processor for executing the function commands;
   a byte logical operation command processor for executing the byte logical operation commands;
   a bit logical operation command processor for executing the bit logical operation commands; and
   an arbiter circuit for arbitrating command executions of said function command processor, said byte logical operation command processor, and said bit logical operation command processor.

2. An operation processing system according to claim 1, which comprises a PC (programmable controller).

3. An operation processing system according to claim 1, which comprises a numerical control device.

Fig. 1

EP 0 445 288 A1

# INTERNATIONAL SEARCH REPORT

International Application No  PCT/JP89/00608

**I. CLASSIFICATION OF SUBJECT MATTER** (if several classification symbols apply, indicate all) *

According to International Patent Classification (IPC) or to both National Classification and IPC

Int. Cl⁴    G05B19/04

**II. FIELDS SEARCHED**

| Minimum Documentation Searched ⁷ | |
|---|---|
| Classification System | Classification Symbols |
| IPC | G05B19/04 |

Documentation Searched other than Minimum Documentation
to the Extent that such Documents are Included in the Fields Searched *

| | |
|---|---|
| Jitsuyo Shinan Koho | 1932 - 1989 |
| Kokai Jitsuyo Shinan Koho | 1971 - 1989 |

**III. DOCUMENTS CONSIDERED TO BE RELEVANT ⁹**

| Category * | Citation of Document, ¹¹ with indication, where appropriate, of the relevant passages ¹² | Relevant to Claim No. ¹³ |
|---|---|---|
| Y | JP, A, 56-164404 (Hitachi, Ltd.) 17 December 1981 (17. 12. 81) (Family : none) | 1 - 3 |
| Y | JP, A, 62-38901 (Yasukawa Electric Mfg. Co., Ltd.) 19 February 1987 (19. 02. 87) (Family : none) | 1 - 3 |
| Y | JP, A, 63-49902 (Hitachi, Ltd.) 2 March 1988 (02. 03. 88) (Family : none) | 1 - 3 |
| A | JP, A, 61-86843 (Hitachi, Ltd.) 2 May 1986 (02. 05. 86) (Family : none) | 1 - 3 |
| A | JP, A, 62-117003 (Toshiba Machine Co., Ltd.) 28 May 1987 (28. 05. 87) (Family: none) | 1 - 3 |

\* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| September 5, 1989 (05. 09. 89) | September 18, 1989 (18. 09. 89) |
| International Searching Authority | Signature of Authorized Officer |
| Japanese Patent Office | |

Form PCT/ISA/210 (second sheet) (January 1985)